# EUROPEAN PATENT SPECIFICATION

(11) **EP 0 261 680 B1**
(45) Date of publication and mention of the grant of the patent: **13.01.1993**
(21) Application number: 87113979.6
(22) Date of filing: 24.09.1987
(51) Int. Cl.: H04M 11/10

(54) **Telephon dictating apparatus**
Telefondiktiergerät
Appareil de dictée téléphonique

(30) Priority: 24.09.1986 JP 225213/86
(43) Date of publication of application: 30.03.1988
(73) Proprietor: OLYMPUS OPTICAL CO., LTD., Tokyo 151 (JP)
(72) Inventor: Sato, Masaaki, Hachioji-Shi Tokyo (JP)
(74) Representative: Behrens, Dieter, Dr.-Ing.

(56) References cited:
- DE-A- 3 503 090
- US-A- 3 725 589
- IBM TECNICAL DISCLOSURE BULLETIN, vol. 22, no. 6, November 1979, pages 2419-2421, New York, US; P. ABRAMSON: "Touch-tone spurious triggering prevention"

## Description

The invention is related to a telephone dictating apparatus comprising the features of the preamble of claim 1.

Such an apparatus is known from US-A-3 725 589 which describes an interface between a telephone system and a dictating apparatus for transmitting control signals and data over the telephone system and to the dictating apparatus in order to record the data whereas control signals are eliminated.

Recently, it is usual practice that contents of a letter or a report are recorded on a magnetic tape with a dictating apparatus by dictation and a typist or a secretary types the recorded contents while reproducing with a transcriber (apparatus for exclusive use in reproduction). Dictating apparatus for such use are generally classified into two types, a desk top which is used in an office and a portable one. Although the latter can be used in dictation everywhere on the road, on a car, in a hotel and the like, it requires forwarding a recorded magnetic tape cassette by mail from a place on a visit or delivering it to a typist or a secretary by carrying back, so that it may be inconvenient in prompt handling.

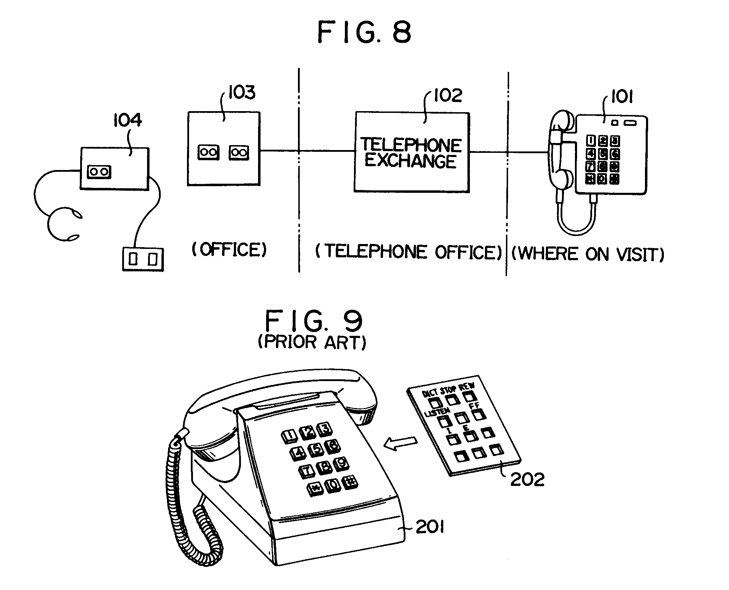

To eliminate such inconvenience, a dictation system utilizing a push-button telephone (commonly called a push-phone or touch-tone telephone) has been recently devised. The dictation system comprises, as shown in Fig. 8, a push-button telephone 101, an exchange 102, a dictating apparatus 103 and a transcriber 104, such that DTMF (Dual Tone Multi Frequency) signals for recording (DICT), stopping (STOP), rewinding (REW), reproducing (LISTEN), fast feeding (FF), a cue signal (I) indicating a starting position of instruction and a cue signal (E) indicating a terminal position of a recorded sentence or dictated body can be delivered by operating push-buttons which are arranged in corresponding relationship with the respective signals.

In the dictation system, a dictator, after he called a dictating apparatus 103 in an office by the telephone 101 in a place on a visit or a separate room, pushes a push-button of the telephone 101 in accordance with a command from the dictating apparatus 103 to start a dictation. At this time, the dictation with the dictating apparatus 103 is effected by frequently repeating recording, stopping, rewinding and reproducing operations in a manner similar to a usual dictation. After the dictation is completed and the telephone is hung up, a secretary takes out the dictated magnetic tape cassette from the dictating apparatus 103 and reproduces by setting the magnetic tape cassette immediately on the transcriber 104 to make a document.

In the conventional dictation system with the structure described above, there is not any particular rule for the corresponding relationship between positions of telephone push-buttons and mode setting positions such as cue signals indicating a starting position of instruction and a terminal position of a body of dictation, as occasion demands, in addition to modes concerned with the tape running system of the dictating apparatus and thus the relationship differs depending upon kinds of dictating apparatus. For this reason, a dictator memorizes or keeps in a note operating positions of push-buttons depending upon kinds of dictating apparatus and must operate the apparatus while confirming mode setting positions when dictating, which is troublesome accordingly.

To eliminate such troublesome operations, it has been devised, as shown in Fig. 9, that an operation indicating board 202 on which various operating modes are written in corresponding relationship with respective push-buttons of a telephone 201, is mounted on an operating area of the telephone 201. In this case, however, the board 202 should be inconveniently carried at all times.

### OBJECT AND SUMMARY OF THE INVENTION

It is an object of the present invention to provide a telephone dictating apparatus which is easily associated with mode setting positions of a dictating apparatus by placing the positional order of push-buttons of a telephone in corresponding relationship with the order of operating positions of mode setting members of the dictating apparatus.

Specifically, a slide switch employed in a hand microphone of a desk top dictating apparatus and a slide switch employed in a portable dictating apparatus, both of which are operating members for switching modes, are most easily operable as operating means of the dictating apparatus of the present invention. The slide switches each are provided so as to be set in the order of, for example, recording (DICT), stopping (STOP), reproducing (LISTN) and rewinding (REW) from top such that these switches are operable with the thumb while the hand microphone and the portable dictating apparatus are held with one hand.

By placing mode setting positions of the slide switches in corresponding relationship with four push-buttons arranged lengthwise in a line of a push-button telephone, it is possible for an dictator to associate his familiar mode setting positions on the push-buttons of the telephone.

According to the present invention, the order of operating push-buttons of a telephone is placed in corresponding relationship with that of operating four mode setting positions of the slide switches for setting modes which are provided on a hand microphone for dictation in a dictating apparatus and on a portable dictating apparatus, which are usually in use by a dictator, so that mode setting positions of the dictating apparatus can be easily associated, thus removing the disadvantage described above.

### BRIEF DESCRIPTION OF THE DRAWINGS

Fig. 1 is a structural schematic diagram showing an embodiment of the present invention;
Fig. 2 is a perspective view of a desk top dictating apparatus in which mode setting positions are shown in a hand microphone for dictation;
Fig. 3 is a perspective view of a portable dictating apparatus in which mode setting positions are shown in the same manner as in Fig. 2;
Fig. 4 is a front view of a hand microphone for dictation in which another example of mode setting positions is shown;
Fig. 5 is a perspective view of a portable dictating apparatus in which a further example of mode setting positions is shown;
Figs. 6 and 7 are front views respectively showing positional arrangements of push-buttons in a push-button telephone;
Fig. 8 is a diagram showing a structure of a dictation system utilizing a push-button telephone; and
Fig. 9 is a perspective view showing an operation indicating board suggested in the past.

### DETAILED DESCRIPTION OF PREFERRED EMBODIMENTS

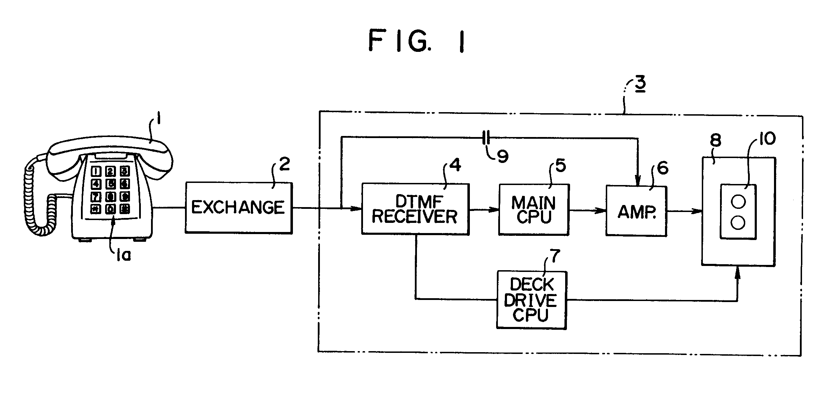

As shown in Fig. 1, a push-button telephone 1 provided with four push-buttons 1a arranged lengthwise respectively in three lines, is connected through an exchange 2 to a dictating apparatus 3.

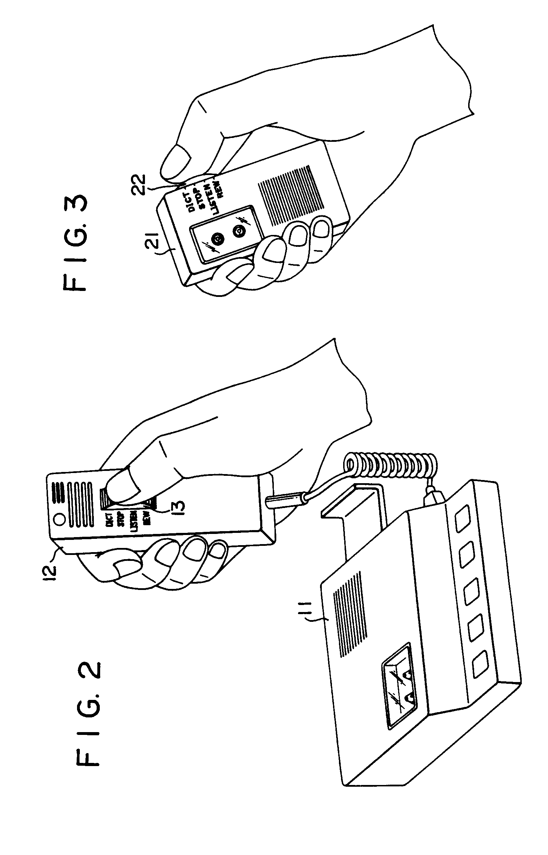

The dictating apparatus 3 comprises a DTMF receiver 4 which is a means for converting DTMF signals, a main CPU 5, an amplifier 6, a deck drive CPU 7, a cassette tape recorder deck 8 and a capacitor 9. In this embodiment, DTMF signals given by depressing a series of four push-buttons 1a with respective four figures "2" "5", "8" and "0" numbered which are arranged in the central line of the three push-button lines of the telephone 1, are converted into mode signals in the same order as that of mode setting positions of the slide switch 13 of the hand microphone 12 shown in Fig. 2 or the slide switch 22 of the portable dicating apparatus 21 shown in Fig. 3. In other words, DTMF signals given by depressing the push-button series 1a respectively numbered "2", "5", "8" and "0" of the telephone 1, are respectively converted to mode signals for recording (DICT), stopping (STOP), reproducing (LISTN) and tape rewinding (REW). These mode signals are delivered to the main CPU 5 to set the cassette tape deck 8 in each of modes of recording, stopping, reproducing and tape rewinding operations by controlling the amplifier 6 and the deck drive CPU 7 in accordance with the signals from the main CPU 5.

In operation, a dictator calls the dictating apparatus 3 by dialing a given number with the push-button series 1a of the telephone 1. Then, the dictating apparatus 3 assumes a OFF·HOOK state and the connection of a telephone circuit to the dictating apparatus 3 is reported by a peep sound or a composite tone. When an exclusive line for dictation is not used, while an out-going message is given to a called party with a composite tone, a dictation is made possible by depressing a security code with the push-button of the telephone 1. Under this state, when the push-button numbered "2" of the push-button series 1a of the telephone 1 is depressed, a DTMF signal combining specified two signals is delivered via the exchange 2 to the dictating apparatus 3. This DTMF signal "2" is converted with the DTMF receiver 4 to a recording mode signals of commanding to assume a recording state and delivered to the main CPU 5. The main CPU 5 produces a command to make the dictating apparatus in a recording state to make the amplifier 6 in a recording state and also produces a command to make the deck drive CPU 7 in a recording state to keep the deck 8 in a recording state. Subsequently, when a dictator starts a dictation, a dictating signal is amplified through the capacitor 9 for cutting off a DC component by the amplifier 6 to be recorded on the cassette tape 10. When a dictator wants to consider contents of a dictation in the course of dictation, the deck 8 stops by depressing the push-button numbered "5" and resumes its recording state by depressing the push-button numbered "2". In addition, when a dictator wants to listen a part just dictated, the deck 8 assumes a tape rewinding state by depressing the push-button numbered "0" and assumes a reproducing state by depressing the push-button numbered "8". At this time, it is free in design to make the apparatus in a back space operation which rewinds a tape only during depression of the push-button numbered "0" or to rewind the tape until the push-button for the next mode, that is, the push-button numbered "8" is depressed. DTMF signals given by operating inputs produced by depressing the push-buttons numbered "5", "8" and "0" are able to respectively command stop, reproduction and rewinding operations in a manner similar to the push-button numbered "2". The recording, stopping, reproducing and rewinding modes each can be selected at random by depressing the respective push-buttons numbered "2", "5", "8" and "0".

When the dictation is completed, the push-button numbered "5" is depressed to stop the deck 8 and then the telephone is hung up.

In the subsequent dictation, when the dictating apparatus 3 is called by operating the push-button with a given number again, contents of the dictation can be recorded on the cassette tape 10 on the deck 8 in a manner similar to the foregoing.

Consequently, according to the above mentioned structure, the push-button series 1a numbered "2", "5", "8" and "0" which are arranged, for example, in the central line of the three push-button lines of the telephone 1, is placed in corresponding relationship with the positions in the mode setting order, which are familiar to a dictator, of the slide switch 13 in the hand microphone 12 of the desk top dictating apparatus 11 or the slide switch 22 in the portable dictating apparatus 21, so that modes of the dictating apparatus can be easily and conveniently associable with the arrangement of the push-buttons numbered "2", "5", "8" and "0" of the push-button series 1a of the telephone 1 without memorizing the operating positions of the push-button series 1a or seeing a note on them.

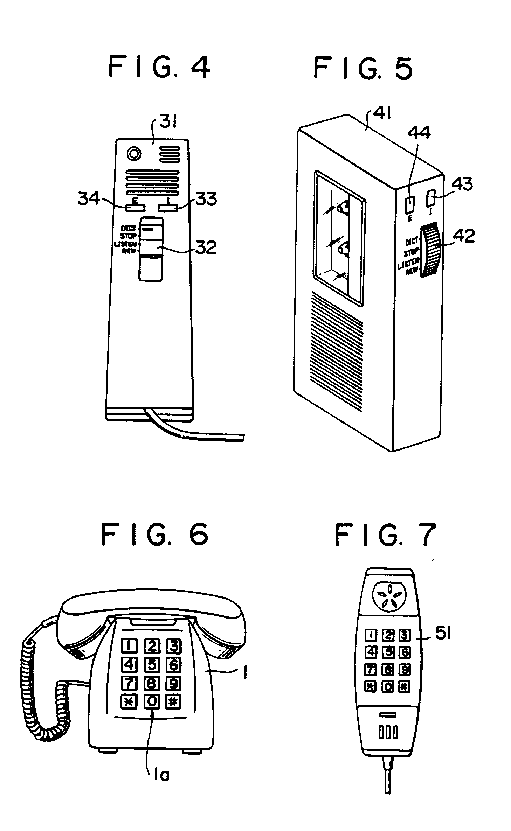

In the above described embodiment, although a mode associated with the tape running system is made selectable with the center-lined push-button series 1a of the telephone 1, it may be modified to be selectable with the arrangement of four push-buttons in the right-hand or left-hand side. In addition, as in a hand microphone 31 of the desk top dictating apparatus shown in Fig. 4 or a portable dictating apparatus 41 shown in Fig. 5, (I) mark recording buttons 33, 43 which command a cue signal, what is called an (I) mark, indicating a starting position of an instruction and (E) mark recording buttons 34, 44 which command a cue signal, what is called an (E) mark, indicating a terminal position of a body of dictation can be arranged on both sides of slide switches 32, 42 which select a mode associated with the tape running system. Similarly, with a structure, as shown in Fig. 6, in accordance with the above layout, it is also possible to produce commands of the (I) and (E) mark with push-buttons numbered "1" and "3" of a series of push-buttons 1a of a telephone 1.

In this case, a DTMF signal given by depressing the push-button numbered "1" is converted by the DTMF receiver 4 to a cue signal (E) for recording an (E) mark. When the cue signal (E) is delivered to the main CPU 5, the main CPU 5 delivers a command to the deck drive CPU 7 so as to keep it in a recording state for a given time period and the deck 8 is controlled by the deck drive CPU 7 to assume a recording state. On the other hand, the amplifier 6 received a command of delivering an (E) mark signal from the main CPU 5 delivers an (E) mark signal to a head only for a given time period to record the (E) mark on a tape. Similarly, an (I) mark can be recorded by depressing the push-button numbered "3". When the (E) and (I) marks are scanned by the dictating apparatus, their positions can be indicated and when searched, they can be stopped at their positions.

With the above structure, it is possible to place the push-buttons numbered "2", "5", "8" and "0" in the central line and the push-buttons numbered "1" and "3" at the top of push-buttons on both sides of the central line in corresponding relationship with positions for setting various operating modes for the hand microphone 31 and the portable dictating apparatus 41, so that all mode setting positions which are familiar to a dictator are associable on the dialing push-buttons. Particularly, when a telephone 51 of the hand type as shown in Fig. 7 is employed, various mode setting positions are easily associable on push-buttons arranged in a manner similar to the hand microphone 31 in image.

While the push-buttons 1a to produce the (E) and (I) marks are designated on the positions numbered "1" and "3" at the top in both side lines of the central line of push-buttons in the above embodiment, it is to be noted that they may be designated at two positions in opposing relationship with each other in both side lines of the central push-button line.

In addition, to prevent the following disadvantage, a push-button may be depressed twice. When it happens that a person gives a voice like the so-called DTMF signals, there may cause the disadvantage that some mode be set in a dictating apparatus without operating a push-button of a telephone.

In such a case, the push-button may be depressed twice. For example, as in the following button operations in recording, it may be achieved to prevent the disadvantage by depressing the buttons twice.

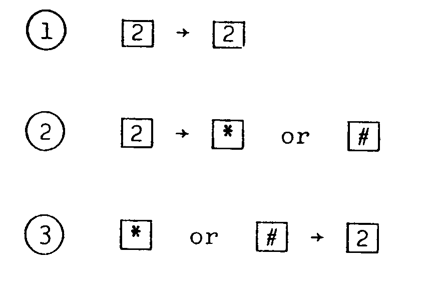

## Claims

1. A telephone dictating apparatus into which modes associated with a tape running system can be set in response to DTMF (Dual Tone Multi Frequency) signals from a push-button telephone provided with four push-buttons in each of three longitudinal lines, comprising DTMF signal converting means for converting DTMF signals given by depressing four push-buttons (1a) in one of three longitudinal lines to four mode signals in the same order as that of said four push-buttons,
**characterized** in that said four push-buttons (1a) comprise a one to one correspondence to four mode setting positions of slide switches (13, 32) for setting modes of a hand microphone (12, 31) for dictation or slide switches (22, 42) for setting modes of a portable dictating apparatus (21, 41), wherein the positions of the telephone push-buttons correspond to the positions of the slide switch belonging to the dictating apparatus.

2. A telephone dictating apparatus according to Claim 1 in which said DTMF signal converting means converts DTMF signals given by depressing four push-buttons in the central line of said three longitudinal lines to mode signals associated with a tape running system.

3. A telephone dictating apparatus according to Claim 2 in which said DTMF signal converting means converts DTMF signals given by depressing two push-buttons (1a) arranged in opposed relationship with each other on both sides of said central line to cue signals for recording different marks ((E), (I)).

4. A telephone dictating apparatus according to Claim 3 in which said DTMF signal converting means converts DTMF signals given by depressing two push-buttons (1a) arranged in opposed relationship with each other at the top of both side lines of said central line to cue signals for recording different marks ((E), (I)).

5. A telephone dictating apparatus according to Claim 1 or Claim 2 in which said DTMF signal converting means converts DTMF signals given by depressing said four push-buttons (1a) to mode signals for recording, stopping, reproducing and tape rewinding operations.

6. A telephone dictating apparatus according to Claim 3 or Claim 4 in which said different marks are an (I) mark corresponding to an instruction and an (E) mark corresponding to a body of dictation.

7. A telephone dictating apparatus according to Claim 1 in which the dictating apparatus comprises a DTMF receiver (4) which is the DTMF signal converting means, a main CPU (5), an amplifier (6), a tape deck drive CPU (7), a cassette tape recorder deck (8) and a capacitor (9) for cutting off a DC component.

8. A telephone dictating apparatus according to Claim 1 in which the mode setting is effective when push-buttons are depressed twice or more within a given time period.

9. A telephone dictating apparatus according to Claim 8 in which a push-button to be depressed later is the same as a push-button depressed first.

10. A telephone dictating apparatus according to Claim 8 in which a push-button to be depressed later is different from a push-button depressed first.

## Patentansprüche

1. Telephondiktiergerät, das auf einem Bandlaufsystem zugeordnete Betriebsarten in Abhängigkeit von DTMF-(DualTonMultiFrequenz)-Signalen von einem Tastentelephon eingestellt werden kann, welches mit vier Drucktasten in jeder von drei Längsreihen versehen ist, mit einer DTMF-Signalwandlereinrichtung zum Umsetzen von durch Drücken von vier Drucktasten (1a) in einer von drei Längsreihen gegebenen DTMF-Signalen in vier Betriebsartensignale in der gleichen Folge wie die der vier Drucktasten, dadurch gekennzeichnet, daß die vier Drucktasten (1a) eine eins-zu-eins-Entsprechung zu vier Wählstellungen für die Arbeitsweise von Schiebeschaltern (13, 32) zum Einstellen von Betriebsarten eines Handmikrophons (12, 31) zum Diktieren oder Schiebeschaltern (22, 42) zum Einstellen von Betriebsarten eines tragbaren Diktiergeräts (21, 41) aufweisen, wobei die Positionen der Telephontasten den Positionen des zum Diktiergerät gehörenden Schiebeschalters entsprechen.

2. Telephondiktiergerät nach Anspruch 1, bei dem die DTMF-Signalwandlereinrichtung durch Drücken von vier Drucktasten in der mittleren Reihe der drei Längsreihen gegebene DTMF-Signale in Betriebsartensignale umwandelt, die einem Bandlaufsystem zugeordnet sind.

3. Telephondiktiergerät nach Anspruch 2, bei dem die DTMF-Signalwandlereinrichtung DTMF-Signale, die durch Drücken von zwei Drucktasten gegeben sind, welche in einander gegenüberliegendem Verhältnis an beiden Seiten der mittleren Reihe angeordnet sind, in Aufrufsignale zum Aufzeichnen verschiedener Markierungen ((E), (I)) umsetzt.

4. Telephondiktiergerät nach Anspruch 3, bei dem die DTMF-Signalwandlereinrichtung DTMF-Signale, die durch Drücken von zwei Drucktasten (1a) gegeben sind, welche in einander gegenüberliegendem Verhältnis oben an beiden Seitenreihen der Mittelreihe angeordnet sind, in Aufrufsignale zum Aufzeichnen verschiedener Markierungen ((E), (I)) umsetzt.

5. Telephondiktiergerät nach Anspruch 1 oder 2, bei dem die DTMF-Signalwandlereinrichtung durch Drücken der vier Drucktasten (1a) gegebene DTMF-Signale in Betriebsartensignale für Aufzeichnungs-, Anhalte-, Wiedergabe- und Bandrücklaufvorgänge umsetzt.

6. Telephondiktiergerät nach Anspruch 3 oder 4, bei dem die verschiedenen Markierungen eine (I)-Markierung entsprechend einer Anweisung und eine (E)-Markierung entsprechend einem Diktat sind.

7. Telephondiktiergerät nach Anspruch 1, bei dem das Diktiergerät einen DTMF-Empfänger (4) aufweist, der die DTMF-Signalwandlereinrichtung ist, eine Hauptzentraleinheit (CPU 5), einen Verstärker (6), eine Laufwerkstreiberzentraleinheit (CPU 7), ein Kassettenbandaufzeichnungslaufwerk (8) und einen Kondensator (9) zum Ausschalten einer Gleichstromkomponente.

8. Telephondiktiergerät nach Anspruch 1, bei dem die Betriebsarteinstellung wirksam ist, wenn Drucktasten zweimal oder mehrmals innerhalb einer gegebenen Zeitspanne gedrückt werden.

9. Telephondiktiergerät nach Anspruch 8, bei dem eine später zu drückende Drucktaste die gleiche ist wie die zuerst gedrückte Drucktaste.

10. Telephondiktiergerät nach Anspruch 8, bei dem eine später zu drückende Drucktaste sich von der zuerst gedrückten Drucktaste unterscheidet.

## Revendications

1. Appareil à dicter téléphonique dans lequel les modes associés à un système de déroulement de bande peuvent être sélectionnés en réponse à des signaux DTMF (fréquences multiples à double tonalité) à partir d'un téléphone à touches muni de quatre touches dans chacune de trois lignes longitudinales, comprenant un moyen de conversion des signaux DTMF pour convertir les signaux DTMF émis en enfonçant quatre touches (1a) dans une des trois lignes longitudinales en quatre signaux de mode dans le même ordre que celui de ces quatre touches,
**caractérisé** en ce que ces quatre touches (1a) comportent une correspondance une à une avec les quatre positions de sélection de mode des commutateurs glissants (13, 32) en modes de sélection d'un microphone à main (12, 31) pour la dictée ou des commutateurs glissants (22, 42) pour sélectionner les modes d'un appareil à dicter portable (21, 41), où les positions des touches du téléphone correspondent aux positions du commutateur glissant appartenant à l'appareil à dicter.

2. Appareil à dicter téléphonique selon la revendication 1, dans lequel ledit moyen de conversion des signaux DTMF convertit les signaux DTMF émis par enfoncement des quatre touches de la ligne centrale desdites trois lignes longitudinales en signaux de mode associés à un système d'entraînement de bande.

3. Ap pareil à dicter téléphonique selon la revendication 2, dans lequel ledit moyen de conversion des signaux DTMF convertit les signaux DTMF émis par enfoncement de deux touches (1a) disposées en relation opposée l'une à l'autre des deux côtés de ladite ligne centrale en signaux de repérage pour enregistrer différentes marques ((E), (I)).

4. Appareil à dicter téléphonique selon la revendication 3, dans lequel le moyen de conversion des signaux DTMF convertit les signaux DTMF émis par enfoncement de deux touches (1a) disposées en relation opposée l'une à l'autre en haut des deux lignes latérales par rapport à ladite ligne centrale en signaux de repérage pour enregistrer différentes marques ((E), (I)).

5. Appareil à dicter téléphonique selon les revendications 1 ou 2, dans lequel le moyen de conversion les signaux DTMF convertit les signaux DTMF émis par enfoncement de ces quatre touches (1a) en signaux de mode pour les opérations d'enregistrement, d'arrêt, de reproduction et de rebobinage de bande.

6. Appareil à dicter téléphonique selon la revendication 3 ou la revendication 4, dans lequel lesdites différentes marques sont une marque (I) correspondant à une instruction et une marque (E) correspondant à un texte dicté.

7. Appareil à dicter téléphonique selon la revendication 1, dans lequel l'appareil à dicter comprend un récepteur DTMF (4) qui est le moyen de conversion des signaux DTMF, une CPU (unité centrale) principale (5), un amplificateur (6), une CPU (7) d'entraînement du dérouleur, un magnétophone à cassette (8) et un condensateur (9) pour éliminer la composante continue.

8. Appareil à dicter téléphonique selon la revendication 1, dans lequel la sélection de mode est effective lorsque les touches sont enfoncées deux fois ou plus pendant un temps donné.

9. Appareil à dicter téléphonique selon la revendication 8, dans lequel une touche à enfoncer ultérieurement est la même que la touche enfoncée en premier.

10. Appareil à dicter téléphonique selon la revendication 8, dans lequel une touche à enfoncer ultérieurement est différente de la touche enfoncée en premier.
